(19) **Europäisches Patentamt / European Patent Office / Office européen des brevets**

(11) **EP 2 003 476 A1**

(12) **EUROPEAN PATENT APPLICATION**

(43) Date of publication:
**17.12.2008 Bulletin 2008/51**

(51) Int Cl.:
**G02B 6/14** (2006.01)  **G02B 6/036** (2006.01)

(21) Application number: **08006521.2**

(22) Date of filing: **31.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.06.2007 US 818780**

(71) Applicant: **Furukawa Electric North America Inc. (a Delaware Corporation) Norcross GA 30071 (US)**

(72) Inventor: **Fini, John M.**
**Jersey City, NJ 07302 (US)**

(74) Representative: **Schoppe, Fritz et al**
**Schoppe, Zimmermann, Stöckeler & Zinkler Patentanwälte**
**Postfach 246**
**82043 Pullach bei München (DE)**

(54) **Bend insensitivity in single mode optical fibers**

(57) An optical fiber that is relatively insensitive to bend loss comprises a core region (12) and a cladding region (14) configured to support and guide the propagation of light in a fundamental transverse mode, the cladding region including (i) an outer cladding region (14.4) having a refractive index less than that of the core region, (ii) an annular cladding pedestal region (14.1) having a refractive index higher than that of the outer cladding region and comparable to that of the core region, (iii) an annular cladding inner trench region (14.2) disposed between the core region and the pedestal region, the inner trench region having a refractive index less than that of the outer cladding region, and (iv) an annular cladding outer trench region (14.3) disposed between the pedestal region and the outer cladding region, the outer trench region having a refractive index less than that of the outer cladding region. In addition, to suppress HOMs the pedestal region is configured to resonantly couple at least one other transverse mode of the core region to at least one non-fundamental transverse mode of the pedestal region. Such fiber is advantageously used as access fiber, but may have other applications, such as sensor fiber.

FIG. 1

**Description**

**BACKGROUND OF THE INVENTION**

Field of the Invention

This invention relates to single mode optical fibers and, more particularly, to reducing bend sensitivity in such fibers. It also relates to fiber designs that are not only relatively bend insensitive but also effectively mode-matched to standard single mode fiber and/or effectively cut off higher order transverse modes.

Discussion of the Related Art

In contrast with standard single mode optical fiber used, for example, in land line, undersea and metro systems, access fiber, which is typically located closer to the user, includes fiber-to the-home (FTTH), jumper cables, and FTTx fiber (e.g., fiber-to-the-curb, indoor wiring). Access fiber must not only interface in a low loss, reliable way with standard single mode fiber (SMF), which carries optical signals to the location being accessed (e.g., home, business, or other facility), but also must be relatively insensitive to the effects of bending, which is inherent in many of the access fiber applications.

More specifically, standard step index, SMF often has a core diameter of about 8-11 $\mu$m. SMF of this type illustratively complies with International Telecommunications Union-Telecommunications Sector Recommendation G. 652. A typical fiber of this type, known as SMF 28, is commercially available from Coming Inc., Coming, NY. With diameters in this range and a core-cladding index contrast of about 0.005-0.007, such SMFs typically have an effective fundamental transverse mode-field-area ($A_{eff}$) of about 60-70 $\mu$m$^2$ at a wavelength of about 1300 nm and about 80-90 $\mu$m$^2$ at a wavelength of about 1550 nm. In order to efficiently couple (splice) such a SMF to an access fiber, the $A_{eff}$ of the access fiber should be as close to that of the SMF as practically possible.

In addition, however, some access fiber may have to be bent, for example, around the corners of walls and in wiring conduits or ducts. In some applications the required bend radius of the access fiber may be 5-15 mm. When fiber is bent so severely, however, optical loss may increase to unacceptable levels. In particular, the optical loss experienced by the fundamental transverse mode of a standard SMF, which may be within system specifications when the fiber is straight (or bent only slightly), is often much higher and out of specification when the same fiber is bent too much. In addition, if the optical signal contains any higher order transverse modes (HOMs), the bend loss experienced by such HOMs will be even higher than that suffered by the fundamental transverse mode.

As nature would have it, however, the design of an access fiber that has a $A_{eff}$ matched to that of a standard SMF and/or with HOMs effectively cutoff often conflicts with the design that achieves low bend loss in typical access environments.

Therefore, a need remains in the art for an access fiber design that has relatively low bend loss when bent to a radius of about 5-15 mm and simultaneously has a $A_{eff}$ matched to that of standard SMF and/or has HOMs effectively cutoff.

Hereinafter, the term *mode(s)* shall mean *transverse mode(s),* and the terms *index* and *indices* shall mean *refractive index* and *refractive indices.*

**BRIEF SUMMARY OF THE INVENTION**

In accordance with one embodiment of my invention, an optical fiber that is relatively insensitive to bend loss comprises a core region and a cladding region configured to support and guide the propagation of light in a fundamental transverse mode, the cladding region including (i) an outer cladding region having a refractive index less than that of the core region, (ii) an annular cladding pedestal region having a refractive index higher than that of the outer cladding region and comparable to that of the core region, (iii) an annular cladding inner trench region disposed between the core region and the pedestal region, the inner trench region having a refractive index less than that of the outer cladding region, and (iv) an annular cladding outer trench region disposed between the pedestal region and the outer cladding region, the outer trench region having a refractive index less than that of the outer cladding region. In addition, to suppress HOMs the pedestal region is configured to resonantly couple at least one other transverse mode of the core region to at least one non-fundamental transverse mode of the pedestal region.

Fiber designed in accordance with my invention has relatively low bend sensitivity and is advantageously used as access fiber, but may have other applications, such as fibers used in sensors or in vehicles.

**BRIEF DESCRIPTION OF THE SEVERAL VIEWS OF THE DRAWING**

My invention, together with its various features and advantages, can be readily understood from the following more detailed description taken in conjunction with the accompanying drawing, in which:

FIG. 1A is a schematic, cross-sectional view of an optical fiber in accordance with one embodiment of my invention;
FIG. 1B is a schematic graph of the refractive index profile of the fiber of FIG. 1A;
FIG. 2 is a schematic graph of the refractive index profile of a step-index-fiber (SIF) used to describe how $A_{eff}$ changes with the refractive index contrast (An) of the core region;
FIG. 3 is a schematic graph of the refractive index profile of a SIF used to describe how $A_{eff}$ changes with a width (e.g., the diameter, D) of the core region;
FIG. 4 shows schematic graph of the refractive index profiles of a SIF with an annular cladding region used to suppress higher order modes (HOMs); FIG. 4A demonstrates the case for a straight fiber; FIG. 4B for a bent fiber;
FIG. 5 is a graph of the refractive index profile of a fiber fabricated in accordance with the design of FIGs. 1A and 1B;
FIG. 6 is a graph of the refractive index profile of another fiber fabricated in accordance with the design of FIGs. 1A and 1B; and
FIG. 7 is a schematic block diagram describing a generalized application of my access fibers.

**DETAILED DESCRIPTION OF THE INVENTION**

The design of optical access fibers for typical practical applications involves consideration of three interrelated requirements: (i) relatively low bend loss (i.e., low bend sensitivity) for a bend radius within a predetermined range (e.g., 5-15 mm); (ii) suppression of HOMs (i.e., relatively low cutoff wavelength for the HOM(s) to be suppressed); and (iii) mode-area matching to standard SMF (e.g., good connectorization and/or splicing to standard fiber, such as SMF 28 commercially available from Coming, *supra*).

**Optical Fiber Design - Bend Insensitivity Considerations**

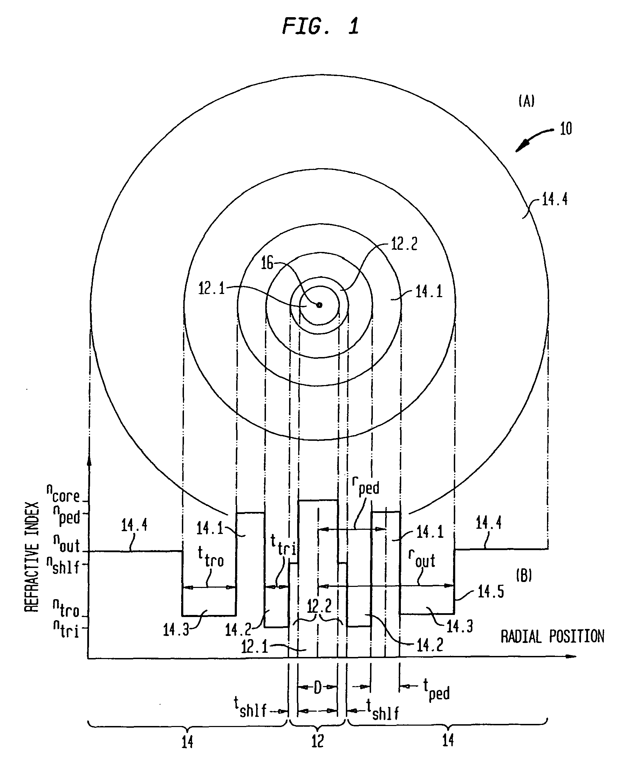

With reference now to FIGs. 1A and 1B, an optical fiber 10 in accordance with one aspect of my invention has relatively low bend loss and, as such, is suitable for a variety of access or sensor fiber applications. Fiber 10 includes a core region 12 surrounded by a cladding region 14, with the core and cladding regions being configured to support and guide the propagation of light (radiation) axially along a longitudinal axis 16 located at essentially the center of the core region 12.

Although the core region 12 is depicted schematically as having a circular cross-section, which is often the preferred shape, it may also have other cross-sectional shapes such as elliptical. In general, mode size is characterized by $A_{eff}$, but for circular core cross-sections typical of SMFs the mode-field diameter (MFD) may also be used.

Fiber of this type are typically made of glass (e.g., silica) in which the refractive indices of the core region and of the cladding region are controlled by the amount and type of dopants (e.g., P, Al, Ge, F) incorporated therein during the fabrication of the fiber, as is well known in the art. These refractive indices, as well as the thicknesses/diameters of core/cladding regions, determine important operating parameters of the fiber, as discussed below.

In accordance with one embodiment of my invention, the cladding region 14 includes a an annular outer cladding region 14.4, an annular, elevated index, pedestal region 14.1, an annular, depressed index, inner trench region 14.2 disposed between the core region 12.1 and the pedestal region 14.1, and an annular, depressed index, outer trench region 14.3 disposed between the pedestal region 14.1 and the outer cladding region 14.4. The refractive index ($n_{ped}$) of the pedestal region 14.1 is higher than the refractive index ($n_{out}$) of the outer cladding region 14.4. In addition, the refractive indices ($n_{tri}$, $n_{tro}$) of both the inner and outer trench regions are lower than that of the outer cladding region 14.4; that is, $n_{ped} > n_{out}$, $n_{tri} < n_{out}$, and $n_{tro} < n_{out}$. As discussed below, the fiber 10 in general, and the pedestal region 14.1 in particular, is configured to suppress preselected HOMs.

In one embodiment, the core region 12 includes an inner core region 12.1 surrounded radially by an annular outer core region (or shelf region) 12.2. The index of the inner core region 12.1 is greater than that of the outer core region 12.1; that is, $n_{core} > n_{shlf}$. The shelf region 12.2 is optional but in some cases may be preferable. In designs where the shelf region is omitted, the core region 12 would simply include only the inner core region 12.1, with the thickness of the inner trench region 14.2 being increased by the width of the omitted shelf region. As discussed below, in either case, the core region 12 is configured to produce a fundamental mode $A_{eff}$ that matches that of a standard SMF.

Bend loss, of course, should be as low as possible. In particular, it should be less than that of a standard SMF at important operating wavelengths (e.g., 1300 nm, 1550 nm, and 1650 nm) for any bend radius in the range of approximately 5-15 mm. To this end, at least one trench region 14.2, 14.3 (and preferably both) should provide a total contrast much higher than that of a standard SMF. Illustratively, SMF 28 has a total contrast of about 0.005. In accordance with one embodiment of my invention, the total contrast of fiber 10 is given by

$$|n_{tri} - n_{core}| > 0.007, \text{ and/or} \qquad (1)$$

$$|n_{tro} - n_{core}| > 0.007 \qquad (2)$$

In addition, the interface 14.5 between the outer cladding region 14.4 and the outer trench region 14.3 should be at a radius in the range of approximately 17-23 um for a bend radius of 5-15 mm, and the refractive index of the core and pedestal regions are comparable; that is,

$$|n_{core} - n_{ped}| < 0.003 \qquad (2a)$$

**Optical Fiber Design-Mode Matching Considerations**

Because access fiber applications often entail splicing or otherwise coupling the access fiber to a standard single mode transmission fiber, it is important that the $A_{eff}$ of the access fiber be matched to that of the standard SMF (e.g., the standard SMF 28 fiber available from Corning, *supra*). In current practice, this requirement means that the access fiber should also be effectively single-moded and should have an $A_{eff}$ of about 80-90 $\mu m^2$ at signal wavelengths of approximately 1550 nm and an $A_{eff}$ of about 60-70 $\mu m^2$ at signal wavelengths of approximately 1300 nm. Equivalently, for an access fiber core region having a circular cross-section, the access fiber should have a core diameter of about 8-11 $\mu m$ approximately.

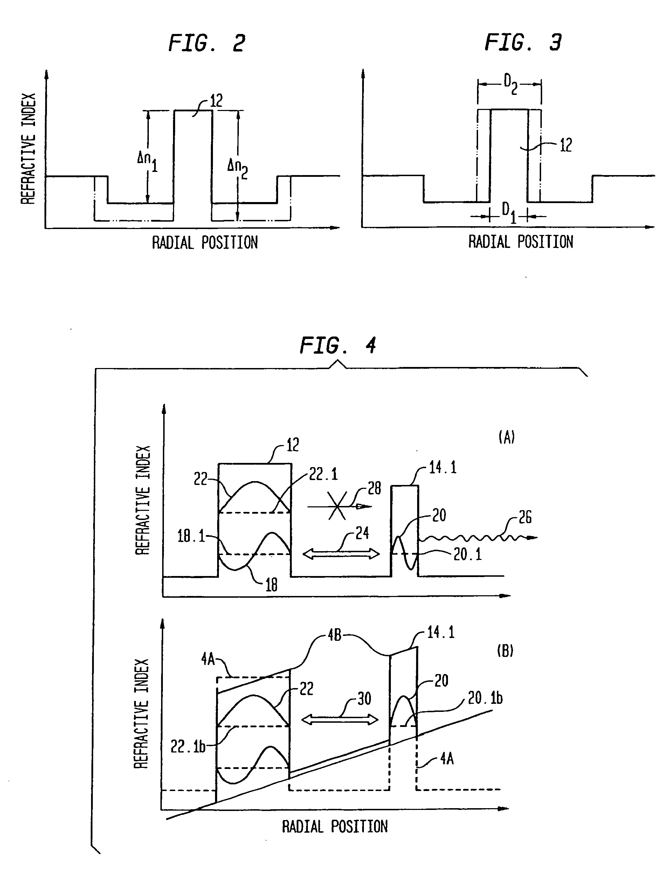

The $A_{eff}$ of fiber 10 is controlled primarily by two parameters: the index contrast $\Delta n$ between the core region 12.1 and the inner trench region 14.2; that is, $\Delta n = (n_{core} - n_{tri})$ and a radial width or core area of the core region 12; that is, in the case of a circular cross-section, the diameter $D$ of the core region, but in the case of an elliptical cross-section, for example, the core area. More specifically, as shown in FIG. 2, for a given D, when the index contrast is decreased from $\Delta n_2$ to $\Delta n_1$, the confinement of the fundamental mode field decreases, which means that its $A_{eff}$ increases. However, reduced mode confinement means the fiber acts as a poorer waveguide and optical losses increase, particularly when the fiber is subject to sharp bends (e.g., a bend radius of 5-15 mm). On the other hand, as shown in FIG. 3, for a given $\Delta n$, when the diameter of the core region 12 increases from $D_1$ to $D_2$, the $A_{eff}$ increases (nearly proportionally), but the number of HOMs supported also increases. In general, the presence of significant energy in HOMs may be undesirable; for example, optical loss increases if the fiber is subject to bending.

In the embodiment of FIG. 1 in which the outer core region (or shelf) 12.2 is omitted, the total contrast (i.e., $n_{core} - n_{tri}$, or $n_{core} - n_{tro}$, or both) should still satisfy inequalities (1) and/or (2), a core width (e.g., diameter D) should be in the range of approximately

$$8 \; \mu m \leq D \leq 11 \; \mu m, \qquad (3)$$

and the index of the outer cladding region 14.4 should satisfy

$$0.003 \leq (n_{core} - n_{out}) \leq 0.006 \qquad (4)$$

approximately. Note, if this contrast is too high, HOMs tend to be introduced in the core region, which, however, are suppressed using the design described in the following section.

An alternative fiber design for meeting the conflicting requirements of reducing bend loss and matching $A_{eff}$ to that of standard SMF is also shown in FIG. 1. More specifically, the core region 12 includes a thin, lower index, annular, shelf region 12.2 surrounding inner core region 12.1, as shown in FIG. 1. Shelf region 12.2 allows the $A_{eff}$ to be increased to match that of a standard SMF. The shelf region 12.2 has a thickness $t_{shlf}$ which is much less than the diameter $D$ of the inner core region 12.1. Illustratively, $D >> t_{shlf}$ and

$$1.0 \ \mu\text{m} \leq t_{shlf} \leq 4.0 \ \mu\text{m} \qquad\qquad (5)$$

approximately when D = 8-11 $\mu$m. In addition, the index $n_{shlf}$ of the shelf region 12.2 is less than that of the inner core region 12.1; that is, $n_{core} < n_{shlf}$. Typically, $(n_{core} - n_{shlf}) < 0.007$ approximately, which is similar to the index contrast (0.005) of standard SMF. Preferably, $n_{shlf}$ satisfies the following inequalities

$$0.004 \leq (n_{core} - n_{shlf}) \leq 0.007, \text{and} \qquad\qquad (6)$$

$$|n_{shlf} - n_{out}| \leq 0.002 \qquad\qquad (6a)$$

approximately, and D is the range of approximately 9-10 $\mu$m.

The foregoing design details of the core region 12 facilitate not only mode matching but also HOM suppression, which is discussed in the following section.

## Optical Fiber Design - HOM Considerations

In order to suppress HOMs, the cladding region 14 of fiber 10 includes pedestal region 14.1, which has a higher index $n_{ped}$ than the remainder of the cladding region; that is, the pedestal region 14.1 is bounded radially by lower index ($n_{tri}$) inner trench region 14.2 and lower index ($n_{tro}$) outer trench region 14.3. In addition, it has a higher index than the index ($n_{out}$) of the outer cladding region 14.4.

The pedestal region 14.1 is configured so that at least one of its non-fundamental (ring) modes resonantly couples with at least one HOM of the core region 12. As shown in the simplified index profile of FIG. 4A, preferably HOM 18 (illustratively depicted as a 1st higher-order mode) of the core region 12 is resonant with a non-fundamental mode 20 of the pedestal region 14.1, whereas the fundamental mode 22 of the core region is not resonant with any mode of the pedestal region. The non-fundamental mode 20 is typically the lowest order non-fundamental ring mode of pedestal region 14.1.

By the terms *resonant* or *resonantly coupled* I mean that the effective refractive index ($n_{eff}$) of a mode in the core region is essentially equal to that of a non-fundamental mode in the pedestal region. Thus, the $n_{eff}$ 18.1 of the 1st higher-order mode 18 of the core region 12 is essentially equal to the $n_{eff}$ 20.1 of the non-fundamental mode 20 of the pedestal region 14.1, which allows energy in HOM 18 to transfer or couple (arrow 24) from the core region into non-fundamental mode 20 of the pedestal region and from there to radiate into the outer cladding region 14.4. (Arrow 26 indicates such radiation via leaky cladding modes, which are usually present.) After a suitable propagation distance along the fiber, this process of resonant transfer and radiation effectively suppresses HOM 18 in the core region. In contrast, $n_{eff}$ 22.1 of the fundamental mode 22 of the core region does not correspond to the $n_{eff}$ of any mode in the pedestal region. Consequently, the fundamental mode 22 propagates effectively in the core region, and no resonant transfer of its energy (negated arrow 28) into the pedestal region takes place.

The condition that a core region mode and a non-fundamental pedestal region mode have essentially equal refractive indices means, for example, that the core region HOM index 18.1 and the pedestal region non-fundamental mode index 20.1 are not so different that coupling of light between these modes is significantly frustrated. In a preferred embodiment of the invention, the difference between indices 18.1 and 20.1 is much less than the difference between the core fundamental mode index 22.1 and the pedestal non-fundamental mode index 20.1.

Proper coupling between the core region mode to be suppressed and the resonant pedestal region mode should also take into account the need to reduce coupling of the latter pedestal mode back into the former core mode.

In addition, fiber 10 should be configured to allow effective leakage of unwanted core modes through the pedestal modes. More specifically, the leakage rate of the annular cladding region 14.1 should be larger than the direct leakage rate from the core region 12 to radiation in the outer cladding region 14.4. To this end, the width or thickness $t_{\text{tro}}$ of the outer trench region 14.3 is preferably approximately equal to the $t_{\text{tri}}$ of the inner trench region 14.2; that is,

$$t_{\text{tro}} \approx t_{\text{tri}}. \tag{7}$$

In addition, the coupling between the core region and the pedestal region should not be so large that desired core modes are disrupted. On the other hand, the coupling between the core region and the pedestal region should not be too small that unwanted core modes will not couple sufficiently to pedestal non-fundamental modes to be suppressed. Next, the leakage rate of the pedestal mode should not be so large that coupling between the core and pedestal region is frustrated (i.e., insufficient). Finally, the leakage rate of the pedestal mode should not be so small that unwanted core modes will experience too little loss to be effectively suppressed.

Adherence to these design principles assures that in the core region 12, for example, fundamental mode 22 is effectively propagated, whereas HOM 18 is effectively suppressed. The degree to which the HOM needs to be suppressed (or cut-off) depends on the particular application. Total or complete suppression is not demanded by many applications, which implies that the continued presence of a relatively low intensity HOM may be tolerable. In any event, suppressing HOMs improves system performance by, for example, reducing total insertion loss, lowering noise in the signal mode, and lowering microbend loss.

The effect of bending on the fiber of FIG. 4A is shown in FIG. 4B. The index profile 4A before bending is skewed as shown by profile 4B, resulting in an increase in $n_{\text{eff}}$ 20.1b of the non-fundamental mode 20 of the pedestal region 14.1. If the bend radius is sufficiently small, the non-fundamental cladding mode 20 may become resonant with the fundamental mode 22 of the core region 12, as shown by arrow 30. Such resonance would disadvantageously increase the optical loss of the fundamental core mode 22. Accordingly, the pedestal region 14.1 needs to be configured to accommodate the expected bend radius without causing the fundamental core mode 22 to be resonant with any cladding mode, in particular with the non-fundamental cladding mode 20.

The foregoing principles of resonant coupling (index matching) may also be applied to the suppression of multiple unwanted core modes either by resonantly coupling them to a single, non-fundamental mode of a pedestal region or by resonantly coupling them to different non-fundamental modes of one or more pedestal regions, each core mode being resonant with a separate pedestal mode.

## Fiber Design Principles

Important parameters in the design of fiber 10 include the index ($n_{\text{core}}$) and radius ($r_{\text{core}}$ = D/2) of the inner core region 12.1, the index ($n_{\text{shlf}}$) and thickness ($t_{\text{shlf}}$) of the annular core (shelf) region 12.2 (if present), the index ($n_{\text{ped}}$), radius ($r_{\text{ped}}$) and thickness ($t_{\text{ped}}$) of the pedestal region 14.1, the index ($n_{\text{tro}}$) and thickness ($t_{\text{tro}}$) of the outer trench region 14.3, and the index ($n_{\text{tri}}$) and thickness ($t_{\text{tri}}$) of the inner trench region 14.2.

To satisfy typical low bend loss and high $A_{\text{eff}}$ requirements requires tradeoffs. Low bend loss implies high index contrast, whereas high contrast implies low $A_{\text{eff}}$. One compromise is to have a low contrast core region (relative to the shelf region). As mentioned previously, this condition translates into ($n_{\text{core}}$ - $n_{\text{shlf}}$) satisfying inequality (6). Illustratively, ($n_{\text{core}}$ - $n_{\text{shlf}}$) ~ 0.005. In addition, the inner trench region 14.2 should not impact the $A_{\text{eff}}$ too much, which means that the shelf region 12.2 (if present) should not be too thin; that is, it should satisfy inequality (5).

On the other hand, from the perspective of bend loss, the thickness and index of the inner trench region 14.2 are very important. Increasing the width (or thickness) of the inner trench region reduces bend loss but also tends to increase the presence of unwanted HOMs.

The presence of HOMs may also significantly impair performance, for example, through multi-path interference. Thus, the aspects of my fiber design related to HOM suppression are also significant factors in achieving low bend loss fibers that simultaneously satisfy other telecommunication system requirements. In general, as discussed previously, HOMs are suppressed by satisfying a resonance condition between a higher order (e.g., 1st order) core mode to be suppressed and a non-fundamental pedestal ring mode; that is, the effective refractive indices of these two modes should be approximately equal to one another. In this regard, particular attention should be paid to the index difference ($n_{\text{core}}$ - $n_{\text{ped}}$) between the inner core region 12.1 and the pedestal region 14.1, as well as the ratio $t_{\text{ped}}/r_{\text{core}}$ of the thickness of the pedestal region to the radius of the inner core region. For $n_{\text{core}}$ ~ $n_{\text{ped}}$ this index matching condition may be satisfied with $t_{\text{ped}}$ in the range of approximately 2-4 $\mu$m. Index matching will generally require a smaller thickness $t_{\text{ped}}$ if $n_{\text{core}}$ < $n_{\text{ped}}$ but a larger $t_{\text{ped}}$ if $n_{\text{core}}$ > $n_{\text{ped}}$.

Bend loss is also related to the bend radius; that is, in general, the tighter the bend (smaller bend radius), the higher the optical losses. However, as discussed previously, there is a critical bend radius ($r_{crit}$) at which the fundamental core mode is resonant with the fundamental pedestal mode. The ring mode index of the pedestal (ring) mode is shifted by an amount given by

$$\Delta n_{ped} = c n_{ped} r_{ped}/r_{bend} \qquad (8)$$

where c is a constant given approximately by

$$0.8 \leq c \leq 1.0. \qquad (9)$$

The critical radius ($r_{crit}$) is approximately the radius $r_{bend}$ at which $\Delta n_{ped}$ is equal to the mode spacing $\Delta n_{ms}$ between the fundamental core mode 22.1 (FIG. 4A) and the higher-order core mode 18.1 (FIG. 4A):

$$r_{bend} > r_{crit} \sim c n_{ped} r_{ped}/\Delta n_{ms}. \qquad (10)$$

At $r_{bend} = r_{crit}$ the optical loss experienced by the fundamental core mode is extremely high; that is, the fundamental core mode is effectively suppressed, a highly undesirable circumstance. To alleviate this problem the radius ($r_{ped}$) of the pedestal region 14.1 can be reduced, resulting in a smaller critical bend radius until the bend radius required for operation is larger than the critical radius.

## Experimental Results

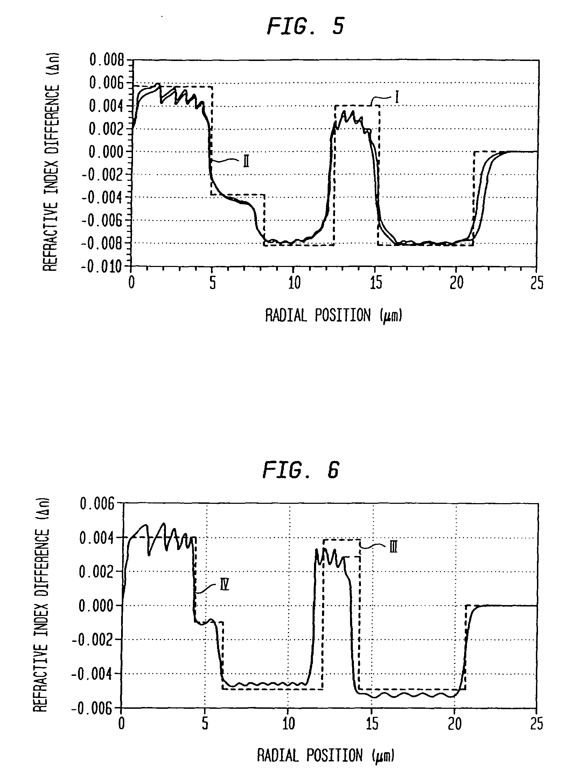

These examples describe bend-insensitive preforms, as well as silica optical fibers drawn from the preforms, in accordance with the illustrative embodiment of my invention in which the core region 12 includes both an inner core region 12.1 and an annular core region 12.2 radially surrounding the inner core region. Well known MCVD was used to fabricate the fibers from silica glass and were doped with Ge in inner core region 12.1, F in annular core region 12.2, F in inner trench region 14.2, Ge in pedestal region 14.1, and F in outer trench region 14.3. Outer cladding region 14.4 was undoped. The as-drawn fibers had the index contrast profiles shown in FIGs. 5 and 6. The target profiles are shown by the dashed line traces I and III, whereas the actual profiles are shown by solid line traces II and IV. The radial position axis (abscissa) gives the actual thickness/radius of the various fiber components: inner core region, shelf region, trench regions, and pedestal region.

Various materials, dimensions and operating conditions are provided by way of illustration only and, unless otherwise expressly stated, are not intended to limit the scope of the invention.

### Example I (Sample PW060217)

In this example, the fiber preform had a diameter of 18.8 mm, and the drawn fibers had an outside diameter (OD) of either 119 $\mu$m or 125 $\mu$m. The various radial components had the following thickness/radius and index contrast (An) relative to the outer cladding region:

| FIBER REGION | THICKNESS ($\mu$m) | RADIUS ($\mu$m) | $\Delta n$ |
|---|---|---|---|
| Inner core | | 4.9 | 0.005 |
| Shelf | 2.9 | | -0.004 |
| Inner trench | 4.3 | | -0.008 |
| Pedestal | 3.2 | 13.7 | 0.004 |
| Outer trench | 6.8 | | -0.008 |

(continued)

| FIBER REGION | THICKNESS ($\mu$m) | RADIUS ($\mu$m) | $\Delta n$ |
|---|---|---|---|
| Outer cladding | | 22 | 0.000 |

The two fibers were characterized in terms of their cutoff wavelengths, bend loss (at a bend radius of 5 mm and at a wavelength of 1650 nm), and MFD (at a wavelength of 1550 nm), as follows:

| FIBER OD ($\mu$m) | CUTOFF (nm) | BEND LOSS (dB/m) | MFD ($\mu$m) |
|---|---|---|---|
| 119 | 1445 | < 0.5 | 8.8 |
| 125 | 1505 | < 0.8 | 9.2 |

This fiber showed no impairment on preliminary CATV tests, despite the relatively high cutoff (1505 nm cutoff wavelength; 1553 nm signal wavelength).

The condition $r_{bend} > r_{crit}$ given by inequality (10) in this case is satisfied as follows. Depending on the value of the constant $c$ = 0.8-1.0, $r_{crit}$ is calculated as being in the range 4.6-5.8 mm. Using the better estimate of $c$ = 0.8, we get $r_{crit}$ = 4.6 mm, which is less than $r_{bend}$ = 5 mm. As is expected, there was a rapid degradation of performance of this fiber when $r_{bend}$ was made smaller than about 5 mm. (The coefficient value c = 0.8 is better because it includes a stress correction known in the art.)

We note there that the fiber of Example I does not satisfy the conditions defined by inequality (6). However, Example II does, which accounts in part for its improved performance.

## Example II (Sample PW061128)

In this example, the fiber preform had a diameter of 19 mm, and the drawn fiber had an outside diameter (OD) of 125 $\mu$m. The various radial components had the following thickness/radius and index contrast ($\Delta n$) relative to the outer cladding region:

| FIBER REGION | THICKNESS ($\mu$m) | RADIUS ($\mu$m) | $\Delta n$ |
|---|---|---|---|
| Inner core | | 4.2 | 0.004 |
| Shelf | 1.6 | | -0.001 |
| Inner trench | 5.7 | | -0.005 |
| Pedestal | 2.3 | 12.7 | 0.003 |
| Outer trench | 7.1 | | -0.005 |
| Outer cladding | | 21 | 0.000 |

The fiber was characterized in terms of its cutoff wavelength, bend loss of 1 dB/m (at a bend radius of 6.25 mm and wavelength of 1550nm), and MFD of 8.6 $\mu$m and 9.2 $\mu$m (at wavelengths 1310nm and 1550nm, respectively), as follows:

This fiber had a significantly lower cutoff of 1304 nm determined by ITU-2m measurement than either fiber of Example I. Some customers currently require a larger MFD and/or a cutoff < 1260 nm, which can be attained by sacrificing bend loss. Example III below addresses such a fiber design.

At 1320 nm the fiber compares favorably to the ITU G.652 MFD requirement of > 8.6 $\mu$m at 1310 nm.

This fiber also showed negligible MPI (multi-path interference) in the C-band.

Splicing with dopant diffusion: < 0.5 dB/splice at 1550 nm.

Connectorization: 0.05 dB < excess loss <0.1 dB. The excess loss appears to be due to loss introduced by the connectorization technique/design employed.

## Example III

This example describes a fiber design that is expected to satisfy stricter cutoff of MFD requirements of certain system applications. The various radial components had the following thickness/radius and index contrast ($\Delta n$) relative

to the outer cladding region:

| FIBER REGION | THICKNESS ($\mu$m) | RADIUS ($\mu$m) | $\Delta n$ |
|---|---|---|---|
| Inner core | | 4.35 | 0.004 |
| Shelf | 2.2 | | -0.004 |
| Inner trench | 4.7 | | -0.006 |
| Pedestal | 2.6 | 12.6 | 0.004 |
| Outer trench | 7.2 | | -0.006 |
| Outer cladding | | 21 | 0.000 |

When the fiber is characterized in terms of its stricter cutoff wavelength, bend loss (at a bend radius of 7.5 mm), and stricter MFD, the following results are expected based on simulations already performed on a fiber having an OD of 125 um: cutoff of 1260 nm, bend loss of < 0.4 dB/m at 1550 nm, and MFD of 8.9 $\mu$m and 9.6 $\mu$m at 1310 nm and 1550 nm, respectively.

It is to be understood that the above-described arrangements are merely illustrative of the many possible specific embodiments that can be devised to represent application of the principles of the invention. Numerous and varied other arrangements can be devised in accordance with these principles by those skilled in the art without departing from the spirit and scope of the invention.

In particular, although I described above how various fiber dimensions affect confinement losses, and hence reduce the amount of optical energy coupled back from the annular region into the core region, it will be apparent to those skilled in the art that there are other ways to accomplish the same result; e.g., by use of absorption, scattering, fiber bends, mode coupling, or gain. Moreover, these techniques may be used separately or in combination with one another.

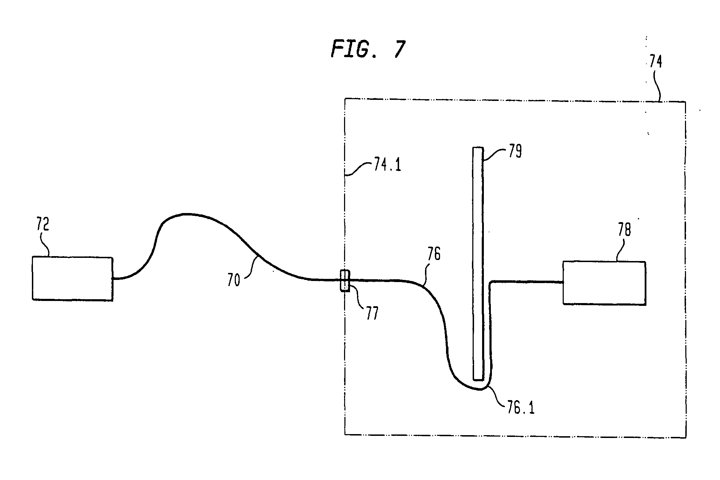

In addition, an illustrative, highly generalized application of my access fibers is shown in FIG. 7. Here, an input fiber (e.g., a standard SMF 70) carries an optical signal from a smyce 72 (e.g., a transmission system) to a facility 74 (e.g., a building housing a business or home). Illustratively, SMF 70 is spliced to an access fiber 76, which carries the signal to a utilization device or apparatus 78 located within or associated with the facility. SMF 70 and access fiber 76 are illustratively spliced to one another at a connection box 77, which is typically located on a wall 74.1 of facility 74. However, the connection box could be located elsewhere within the facility or outside it. In either case, access fiber 76 typically does not have a straight line path to utilization apparatus 78. Rather, it often has to navigate around one or more obstacles 79, which means that it frequently has at least one curved segment or section 76.1. As described previously, such curved sections may have a tight bends in which the fiber bend radius is 5-15 mm, approximately. The mode-matching features of my access fibers permit them to be efficiently spliced to SMF and at the same to be bent around obstacles without experiencing excessive bend loss. Alternatively, SMF 70 may be an output fiber or both an input and an output fiber. Therefore, in general SMF 70 may be referred to as an input/output fiber.

Finally, although I have emphasized the use of my fibers in access applications, it will also be apparent to those skilled in the art that the reduced bend sensitivity of these fibers renders them attractive for use in, for example, sensors or vehicles (e.g., automobiles, airplanes, trains, boats).

## Claims

1.   An optical fiber comprising:

a core region having a longitudinal axis, and
a cladding region surrounding said core region, said core and cladding regions configured to support and guide the propagation of light in a fundamental transverse mode in said core region in the direction of said axis, said cladding region including

a pedestal region having a refractive index higher than that of said outer cladding region and comparable to that of said core region,
an annular inner trench region disposed between said core region and pedestal region, said inner trench region having a refractive index less than that of said outer cladding region, and
an annular outer trench region disposed between said pedestal region and said outer cladding region, said outer trench region having a refractive index less than that of said outer cladding region,
said pedestal region being configured to resonantly couple at least one other transverse mode of said core region to at least one non-fundamental transverse mode of said pedestal region.

2. The fiber of claim 1, wherein the refractive indices of said core region and said pedestal region are within approximately 0.003 of one another.

3. The fiber of claim 1, wherein the difference refractive index between said core region and at least one of said trench regions is greater than approximately 0.007.

4. The fiber of claim 3, wherein said core region has a radial width is in the range of approximately of 8 to 11 $\mu$m, and wherein the difference in refractive index between said core region and at least one of said trench regions is in the range of approximately 0.008-0.012.

5. The fiber of claim 1, wherein the radial thickness of said pedestal region is approximately 2-4 $\mu$m.

6. The fiber of claim 1, wherein the interface between said outer cladding region and said outer trench region is located at a radius of approximately 17-23 $\mu$m.

7. The fiber of claim 1, wherein the difference in refractive index between said core region and said outer cladding region is in the range of approximately 0.003 - 0.006.

8. The fiber of claim 1, wherein said pedestal region is radially located approximately half way between said core region and said outer cladding region.

9. The fiber of claim 8, wherein $0.5 < (r_{out} - r_{ped})/(r_{ped} - r_{core}) < 2.0$, where $r_{out}$ is the radial distance of the interface between said third region and said outer cladding region, $r_{ped}$ is the radius of said pedestal region, and $r_{core}$ is a width of said core region.

10. The fiber of claim 1, wherein a width of said core region and the refractive index of said core region are configured to guide said fundamental mode with a mode-field area of approximately 60-70 $\mu$m$^2$ at an operating wavelength of said fiber of approximately 1300 nm and approximately 80-90 $\mu$m$^2$ at an operating wavelength of said fiber in the range of approximately 1550 nm.

11. The fiber of claim 1, wherein the effective refractive index of said other transverse mode of said core region and the effective refractive index of said transverse mode of said pedestal region are essentially equal to one another.

12. The fiber of claim 1, wherein said pedestal region is configured to resonantly couple a transverse higher-order mode of said core region to a non-fundamental transverse mode of said pedestal region.

13. The fiber of claim 1, wherein said core region and said pedestal region are configured to reduce the flow of light energy from said pedestal region into said core region.

14. The fiber of claim 13, wherein said core region and said pedestal region are configured to leak light energy from said pedestal region into said outer cladding region.

15. The fiber of claim 1, wherein said fiber is configured to operate over a range of wavelengths, and wherein the effective refractive indices of said resonant transverse modes of said core and pedestal regions are essentially equal at a multiplicity of wavelengths within said range.

16. The fiber of claim 1, wherein said pedestal region is configured to resonantly couple multiple transverse modes of said core region to at least one non-fundamental transverse mode of said pedestal region.

17. An access system comprising:

a single mode optical input/output fiber for carrying signal light to/from an accessed facility,
a utilization device located within said facility,
an access fiber according to claim 1 for coupling said input/output fiber to said utilization device, said access fiber being configured to have a mode field area essentially equal to the mode field area of said input/output fiber.

18. The system of claim 17 wherein said access fiber includes at least one curved fiber segment having a bend radius greater than a critical radius given by $cn_{ped}r_{ped}/\Delta n_{mode}$, where c is a constant in the range of approximately 0.8-1.0, $n_{ped}$ is the refractive index of said pedestal region, $r_{ped}$ is the radius of said pedestal region, and $\Delta n_{mode}$ is the effective refractive index difference between the fundamental transverse mode and the first order transverse mode of said core region.

19. The system of claim 18, wherein said bend radius is in the range of approximately 5-15 mm.

20. The fiber of claim 1, wherein said core region includes an inner core region and an annular outer core region surrounding said inner core region, the refractive index of said outer core region being less than that of said inner core region and the thickness of said outer core region being less than a width of said inner core region.

# FIG. 1

## FIG. 2

REFRACTIVE INDEX

RADIAL POSITION

## FIG. 3

RADIAL POSITION

## FIG. 4

(A)

REFRACTIVE INDEX

(B)

REFRACTIVE INDEX

RADIAL POSITION

## FIG. 5

## FIG. 6

FIG. 7

**Europäisches Patentamt**
**European Patent Office**
**Office européen des brevets**

# EUROPEAN SEARCH REPORT

Application Number

EP 08 00 6521

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/021533 A1 (ISHIKAWA SHINJI [JP] ET AL) 30 January 2003 (2003-01-30) * paragraph [0030] - paragraph [0033]; figure 3 * | 1,3,5,7 | INV. G02B6/14 G02B6/036 |
| A | EP 1 116 968 A (FUJIKURA LTD [JP]) 18 July 2001 (2001-07-18) * paragraph [0108] * * paragraph [0112] * * paragraph [0119]; figure 5(h) * | 1-20 | |
| A | EP 1 052 528 A (SUMITOMO ELECTRIC INDUSTRIES [JP]) 15 November 2000 (2000-11-15) * paragraph [0005] - paragraph [0010] * * paragraph [0055] - paragraph [0058]; figures 9A,9B * | 1-20 | |

TECHNICAL FIELDS SEARCHED (IPC)

G02B

The present search report has been drawn up for all claims

| Place of search | Date of completion of the search | Examiner |
|---|---|---|
| The Hague | 24 October 2008 | Mouget, Mathilde |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 08 00 6521

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2008

| Patent document cited in search report | | | Publication date | Patent family member(s) | | | Publication date |
|---|---|---|---|---|---|---|---|
| US | 2003021533 | A1 | 30-01-2003 | JP | 2003029062 | A | 29-01-2003 |
| EP | 1116968 | A | 18-07-2001 | CN | 1306628 | A | 01-08-2001 |
| | | | | WO | 0060389 | A1 | 12-10-2000 |
| | | | | US | 6535678 | B1 | 18-03-2003 |
| EP | 1052528 | A | 15-11-2000 | AU | 758782 | B2 | 27-03-2003 |
| | | | | AU | 1351599 | A | 12-07-1999 |
| | | | | CA | 2316379 | A1 | 01-07-1999 |
| | | | | WO | 9932909 | A1 | 01-07-1999 |
| | | | | US | 6498874 | B1 | 24-12-2002 |

EPO FORM P0459

For more details about this annex : see Official Journal of the European Patent Office, No. 12/82